# EUROPEAN PATENT APPLICATION

(11) **EP 4 000 814 A1**
(43) Date of publication of application: **25.05.2022**
(21) Application number: 20209047.8
(22) Date of filing: 20.11.2020
(51) Int. Cl.: B25J 9/16, B25J 15/06, B65G 47/91, B26D 5/00, B26F 1/38

(54) **IMPROVED STEERING OF GRIPPER HEAD OF A GRIPPER OF A DIGITAL CUTTING SYSTEM**

(71) Applicant: ZÜND SYSTEMTECHNIK AG, 9450 Altstätten (CH)
(72) Inventor: Ah-Hu, Stephen, 97419 La Possession (FR); Vanhauwaert, Bart, 3000 Leuven (BE)
(74) Representative: Kaminski Harmann

(57) **Abstract**

The invention relates to a computer-implemented method for a cutting system, the cutting system at least comprising a digital cutter and a gripper for picking up cut parts.

Therein, the digital cutter is built for cutting a part of a sheet according to a cut design, the cut part having a specific pathway of its boundary line.

The gripper is built for picking up the cut part from the sheet, wherein the gripper comprises a gripper head and a movement apparatus. Thus, the gripper head is provided with a plurality of degrees of freedom of motorized movement including a variable heading angle (Ψ) and/or variable lateral position (x- and y-position) in a plane parallel to the sheet. The gripper head comprises a plurality of suction spots having known geometric arrangement, said arrangement of suction spots defining a mean grid spacing.

According to the invention, the method comprises carrying out an optimization algorithm for determining a gripping pose in which the cut part is to be gripped by the gripper head. Therein, the optimization algorithm being programmed for maximizing a number of cut-part-facing suction spots coming to lie on the cut part in the gripping pose, wherein the optimization algorithm optimizes over
- heading angle candidates (Ψ) for the gripping pose within a range extending consistently over at least 90° and/or
- lateral position candidates for the gripping pose within sub-mean-grid-spacing range
under exploitation of
- first input data consistently representing the complete specific pathway of the boundary line of the cut part and
- second input data relating to the known geometric arrangement.

The determined gripping pose will be provided as output data.

## Description

### FIELD OF THE INVENTION

The present invention relates to a digital cutting system comprising a cutting machine and a vacuum gripper, the vacuum gripper being designed for removing cut parts from a work table of the cutting machine that have been cutout of a sheet.

### BACKGROUND OF THE INVENTION

In order to be cut, a sheet of material - such as leather or cardboard - can be positioned resting on a work plane of a digital cutter. The digital cutter can cut out a part of the sheet according to a cut design, hence, the cut part having a desired specific shape with specific pathway of its boundary line. The work plane may define an x- and a y-direction.

Generic cutting machines are described for example in documents EP 1 385 674 B1, EP 2 488 333 B1, EP 3 260 255 A1, WO 2018 184677 A1 and EP 3 488 983 A1. Such a cutting machine (or digital cutter) has a working surface, which is designed to receive one or more object to be cut, and a working group arranged movably above the working surface and having a blade or another cutting device for cutting objects situated on the working surface. Furthermore, a camera unit may be arranged relative to the working surface, in particular above the working surface, in such a way that the field of vision of the camera unit comprises at least part of the working surface. Based on positions of optical register features or recognition of printed designs on the sheet to be cut in an image of the camera, a cutting path (that may already be compensated for two-dimensional distortion occurring in the sheet of material to be cut) may then be defined depending on a selected cutting instruction.

In order to automatically remove a cut part from the work plane, vacuum grippers are known to be used. Such grippers are typically designed for picking up the cut part from a sheet, having a gripper head and a movement apparatus, in particular a gripper arm, such that the gripper head is provided with a plurality of degrees of freedom of motorized movement. The motorized movement usually at least includes a variable heading angle (Ψ) and variable lateral position (x- and y-position) in a plane parallel to the sheet, but may further include additional degrees of freedom. In particular, the gripper arm may be positionable within a specific movement volume according to any desired pose, i.e. it may be positioned within said volume according to any desired position (with three degrees of translational movement, such as e.g. x-, y- and z-position) and any desired orientation (such as e.g. heading angle, pitch angle and roll angle). Furthermore, the gripper head may comprise a plurality of suction spots having known geometric arrangement.

Suction/vacuum gripping devices according to the state of the art are exemplarily described e.g. in DE 689 03 694 T2, DE 690 08 874 T2, EP 0 348 311 B1, EP 2 720 838 B1 and EP 2 911 963 B1.

In order to pick-up a cut part, it is known to position the gripper head - in a gripping pose - over and on a cut part, such that the cut part is covered by the arrangement of suction spots of the gripper head. E.g., the gripper head may be positioned in such a gripping pose that a center of the suction spot arrangement is coming to lie more or less over and on a central point of the cut part. Hence, in order to determine the gripping pose, according to the state of the art, a central point of the cut part may be calculated, and the gripper head may be positioned - as the gripping pose - with its center positioned over and on the central point of the cut part. Alternatively, according to methods of the state of the art, a middle x-coordinate of a maximal extent of the cut part in x-direction and a middle y-coordinate of a maximal extent of the cut part in y-direction may be determined, and the rectangular gripper head may e.g. be positioned such that its center in head length coincides with the middle x-coordinate and that its center in head width coincides with the middle y-coordinate.

### OBJECT OF THE INVENTION

It is an objective of the present invention to improve the process of picking up cut parts from a work plane of a digital cutter with a suction gripper. Therein, in particular, the building works and physical structure of the cutting system (i.e. including cutter and gripper) shall be affected as little as possible.

### SUMMARY OF THE INVENTION

The invention relates to a computer-implemented method for a cutting system as defined in the independent claim.

The cutting system comprises a digital cutter for cutting a part of a sheet (i.e. cutting out parts from a sheet of material) according to a cut design, the cut part, i.e. the part after having been cut out, then having a specific pathway of its boundary line.

The cutting system further comprises a gripper for picking up the cut part from the sheet. The gripper comprises a gripper head and a movement apparatus, e.g. a gripper arm, such that the gripper head is provided with a plurality of degrees of freedom of motorized movement. Therein at least the following movability is provided by the movement apparatus for adopting a specific gripping pose with the gripper head:
- a variable lateral position in a plane parallel to the sheet (i.e. variable x- and y-position, meaning translational movability in two linear independent directions in a plane parallel to the sheet, like two orthogonal directions in a plane parallel to the sheet, e.g. named x- and y-direction) and/or
- a variable heading angle (Ψ), meaning rotational movability in a plane parallel to the sheet.

The gripper head further comprises a plurality of suction spots having known geometric arrangement such that geometric arrangement of each of the plurality of suction spots being known (the known arrangement of the plurality of suction spots in the following being called "suction-spot-arrangement"), said suction-spot-arrangement defining a mean grid spacing.

According to the present inventive idea, an optimization regarding the gripping pose to be adopted by the gripper head for gripping a cut part is performed with the target to maximize a number of suction spots of the suction-spot-arrangement that lie on and are, thus, able to act on the cut part in the gripping pose. By determining and setting the gripping pose in such a way that the number of suction spots coming to lie on and, therewith, being enabled to act on the cut part in the gripping pose (i.e. when adopting the gripping pose) is maximized, a gripping force on the cut part and a gripping stability (i.e. when picking up the cut part and carrying it over from the working surface of the cutter to a collection place) can be increased.

To that end, in more detail, the computer-implemented method for above-said cutting system comprises:

Step A) Carrying out an optimization algorithm for determining and setting a gripping pose in which the cut part is to be gripped by the gripper head, the optimization algorithm being programmed for maximizing a number of cut-part-facing suction spots of the suction-spot-arrangement coming to lie on the cut part in the gripping pose. Therein, according to the invention, the optimization algorithm optimizing over
- heading angle candidates (Ψ) for the gripping pose within a range extending consistently over at least 90°, in particular extending consistently over at least 180°, more particular extending consistently over 360°, and/or
- lateral position candidates for the gripping pose within sub-mean-grid-spacing range, i.e. with sub-mean-grid-spacing resolution,
   under consideration/exploitation of
- first input data consistently representing the complete specific pathway of the boundary line of the cut part, and
- second input data relating to the known geometric arrangement (i.e. the known geometric arrangement of the plurality of suction spots of the suction-spot-arrangement of the gripper head).

Step B) Providing the determined gripping pose as output data.

As mentioned above, by setting the gripping pose in such a way that the number of cut-part-facing suction spots is maximized, a gripping force on the cut part and a gripping stability can be increased. Therewith, the process of picking up cut parts from a work plane of a digital cutter with a suction gripper can be improved, in particular with little or even without the need to affect or reconstruct the building works and physical structure of the cutting system (i.e. including cutter and gripper).

According to a further aspect of the invention, as the first input data, which consistently represents the complete specific pathway of the boundary line of the cut part, the cut design data itself (i.e. design data regarding the desired design of the part to be cut) may e.g. be used, but also other data consistently representing the complete path taken by the cutting tool during the cutting process may be used. E.g., some cutters have a camera unit arranged thereon, in particular arranged above the working surface, in such a way that the field of vision of the camera unit comprises at least part of the working surface. Based on positions of optical register features printed on the sheet or based on recognition of printed designs on the sheet to be cut within an image of the camera, a cutting path (that may already be compensated for two-dimensional distortion occurring in the sheet of material to be cut) may have been determined, and this data may also be used as the first input data.

The first input data thus represents the entire shape of the cut part (i.e. including information about the shape and extend and coverage of the area / of the surface of the cut part). And, according to the invention, said complete specific pathway of the boundary line of the cut part enters into and is considered/exploited for the optimization.

According to a further aspect of the invention, the above-mentioned optimization over lateral position candidates for the gripping pose, in particular within sub-mean-grid-spacing range, may mean that the maximization of the number of cut-part-facing suction spots is done under variation of the lateral position of the gripping pose (i.e. the positional/translational components of the gripping pose in two directions seen in a plane parallel to the sheet, i.e. in so-called x- and y-direction). Thus, the lateral position of the gripping pose with respect to the sheet forms one optimization parameter for the optimization. Therein, the lateral position of the gripping pose is varied within/over a range including values for the x- and y-coordinate of the gripping pose lying as close together as or closer together than the mean-grid-spacing (in other words: the x- and y-positional-components of the gripping pose are varied with a resolution equal to or higher than the mean-grid-spacing of the suction-spot-arrangement). More particular, these lateral positional components of the gripping pose may be optimized continually over the complete available/allocatable range of lateral movement of the gripper head or may be optimized reduced to a discrete set of feasible lateral positional components, including lateral positional components with a resolution higher than the mean-grid-spacing of the suction-spot-arrangement. In particular, however, also in case of using discrete set of feasible lateral positional components, the resolution for that set may typically be chosen to be by far higher than the mean-grid-spacing (such as the chosen resolution may e.g. be equal to or higher than a reachable accuracy for positioning of the gripper head by the movement apparatus).

In particular, the variable lateral position may be a variable x- and a variable y-position of the gripper head in the plane parallel to the sheet, and the optimization algorithm may optimize over x-position candidates and y-position candidates for the gripping pose within sub-mean-grid-spacing range, in particular with at least millimeter resolution.

Similarly, the above-mentioned optimization over heading angle candidates for the gripping pose may mean that the maximization of the number of cut-part-facing suction spots is done under variation of the heading angle of the gripping pose (i.e. the rotational component of the gripping pose in a plane parallel to the sheet, i.e. the rotational component with rotation axis orthogonal to a plane parallel to the sheet). Thus, the heading angle of the gripping pose in a plane parallel to the sheet may form one optimization parameter for the optimization. Therein, the heading angle of the gripping pose may be varied continually within at least a range of 90°, or continually within the complete available/allocatable range of heading angles adoptable by the gripper head, or may be optimized over discrete values for the heading angle, i.e. reduced to a discrete set of feasible heading angles, the set consistently extending over a range of at least 90°.

Summed up, the above-described optimization algorithm, with the objective to maximize number of cut-part-facing suction spots in the gripping pose, carrying out an optimization over lateral position candidates and/or heading angle candidates for the gripping pose under consideration/exploitation of the entire shape of the cut part (i.e. the entire specific pathway of the boundary line of the cut part), according to the invention, goes far beyond determination of a gripping pose according to the state of the art, where only a general/global placement or location of the cut part on the working surface of the cutter (like e.g. an extension of the cut part in x- and y-direction) is considered for finding or choosing (i.e. setting/ determining) the gripping pose. E.g., only the smallest and largest x-coordinate covered by the cut part and the smallest and largest y-coordinate covered by the cut part are considered for setting/determining the gripping pose according to the state of the art. But no optimization for the gripping pose at all is done in prior art, in particular not with the objective to maximize the number of cut-part-facing suction spots in the gripping pose, and not under exploitation (i.e. entrance into the optimization) of the complete specific pathway of the boundary line of the cut part.

According to a further aspect of the invention, the known geometric arrangement may have matrix form with fix positioning of the suction spots forming a regular rectangular grid, having constant grid spacing in the directions of extend of the rectangular grid, the constant grid spacing thus forming the mean grid spacing. Therein, the grid spacing shall mean the distance in-between direct suction spot neighbors within the suction-spot-arrangement.

According to a further aspect of the invention, the optimization algorithm may optimize over heading angle candidates for the gripping pose within the range extending consistently over at least 90° with at least five-degree resolution, in particular with at least one-degree resolution.

According to a further aspect of the invention, the optimization algorithm may optimize consistently over the complete available range of motorized movement for the gripper head including all available of the plurality of degrees of freedom of motorized movement, with minimum resolution corresponding to an accuracy of positionability of the gripper head with the movement apparatus.

According to a further aspect of the invention, the known geometric arrangement may form an irregular pattern, with fix positioning of the suction spots in an irregularly distributed form, wherein an average spacing in-between each pair of directly neighboring suction spots forming the mean grid spacing.

According to a further aspect of the invention, the second input data relating to the known geometric arrangement includes information about fix positioning of each of the plurality of suction spots.

According to a further aspect of the invention, the plurality of suction spots have known individual physical properties including at least one of a spot diameter and a suction strength, and the optimization algorithm is programmed for (as further optimization objective or objectives)
- maximizing an overall suction effect caused on the cut part by cut-part-facing suction spots overlaying the cut part in the gripping pose, and/or
- maximizing a total area as the sum of cut-part-facing suction spot areas overlaying the cut part in the gripping pose,
   the optimization algorithm further considering/exploiting third input data relating to the known individual physical properties of the suction spots.

According to a further aspect of the invention, the optimization algorithm may be programmed for (as further optimization objective) maximizing a number of cut-part-facing suction spots coming to lie on the cut part within a defined edge area close to the boundary line of the cut part in the gripping pose. E.g., in case a range of gripping poses may provide equally for maximum number of cut-part-facing suction spots, the gripping pose may be further optimized in such regard that a maximum number of a subset of the cut-part-facing suction spots lies within a boundary area (i.e. defined edge area close to the boundary line of the cut part). Such boundary area may e.g. be defined as the area that is closer than a pre-given distance (e.g. 5 cm) to the boundary line of the cut part.

According to a further aspect of the invention, two or more cut parts may be to be cut by the digital cutter according to respective cut designs, each of the two or more cut parts having a specific pathway of its boundary line and a specific localization within the sheet. In such a case, the optimization algorithm may be programmed for - as further optimization objective - maximizing a number of cut-part-facing suction spots coming to lie in sum on the two or more cut parts in the gripping pose. Therein, the optimization algorithm then optimizes over the heading angle candidates (Ψ) and/or the lateral position candidates for the gripping pose further under consideration of further input data consistently representing the complete specific pathway of the boundary line of each of the two or more cut parts and the specific localization within the sheet of each of the two or more cut parts.

According to a further aspect of the invention, the gripper may built such that each of the plurality of suction spots is individually positionable to an individual suction spot deflection-position within the arrangement by an extend of maximal half of the mean grid spacing in at least one direction in a plane parallel to the sheet, in particular in x- and/or y-direction, such that the known geometric arrangement being variable. Then, the optimization algorithm may further optimize over individual suction spot deflection-position candidates for each of the plurality of suction spots for the gripping pose. The determined gripping pose, including the optimized individual suction spot deflection-position for each of the plurality of suction spots, may then be provided as the output data.

According to a further aspect of the invention, the optimization algorithm may be based on at least one of
- graphical best fit approach,
- a linear programming approach, in particular the simplex algorithm,
- an iterative approach, in particular coordinate descent methods or the Newton's method,
- a global convergence approach, and
- a heuristic approach, in particular a Hill climbing technique or the downhill simplex method.

According to a further aspect of the invention, the gripper head may be a vacuum gripper head and may comprise a flat gripping surface whereat the plurality of suction spots are arranged.

According to a further aspect of the invention, each suction spot of the plurality of suction spots may be individually and selectively controllable and activatable, wherein the automatic controller being further configured for providing indication about the cut-part-facing suction spots coming to lie on the cut part in the determined gripping pose as further output data (such that the gripper head may be controlled that only the indicated cut-part-facing suction spots are activated for picking up the cut part).

The invention also relates to an automatic controller for use as part of and within a cutting system, the cutting system at least comprising a digital cutter for cutting a part of a sheet according to a cut design and a gripper for picking up a cut part of the sheet. The gripper comprises a gripper head and a movement apparatus, in particular a gripper arm, such that the gripper head is provided with a plurality of degrees of freedom of motorized movement including a variable heading angle and variable lateral position (as x- and y-position) in a plane parallel to the sheet. The gripper head comprises a plurality of suction spots having known geometric arrangement, said arrangement defining a mean grid spacing. According to the invention, the automatic controller is configured to perform the method as described above, according to any variation as described above.

The invention also relates a computer program product comprising instructions which, when the program is executed by a computing unit, cause the computing unit to carry out the method as described above, according to any variation as described above.

The invention also relates a computer-readable data carrier having stored thereon the above-defined computer program product, or a data carrier signal carrying the above-defined computer program product.

### BRIEF DESCRIPTION OF THE DRAWINGS

By way of example only, preferred embodiments of the invention will be described more fully hereinafter with reference to the accompanying figures, wherein:
Figure 1 shows a generic cutter system comprising a digital cutter and a gripper in a first embodiment;
Figure 2 shows the gripper head of Figure 1 more closely;
Figure 3 shows the gripper head of Figure 1 more closely from a further perspective;
Figure 4 shows a generic cutting system comprising a digital cutter and a gripper in a second embodiment;
Figure 5 shows the embodiment of Figure 4 with the gripper gripping a cut part;
Figure 6 shows a generic cutting system comprising a digital cutter and a gripper in a third embodiment;
Figure 7 shows the embodiment of Figure 6 with the gripper gripping cut parts;
Figure 8 shows a flat working surface from above and a not-optimized suction-spot-arrangement with respect to a cut part to be gripped;
Figure 9 shows the embodiment of Figure 8 with an optimized suction-spot-arrangement with respect to the cut part to be gripped;
Figure 10 shows a flat working surface from above and a not-optimized suction-spot-arrangement with respect to a cut part to be gripped; and
Figure 11 shows the embodiment of Figure 10 with an optimized suction-spot-arrangement with respect to the cut part to be gripped.

### DETAILED DESCRIPTION OF THE DRAWINGS

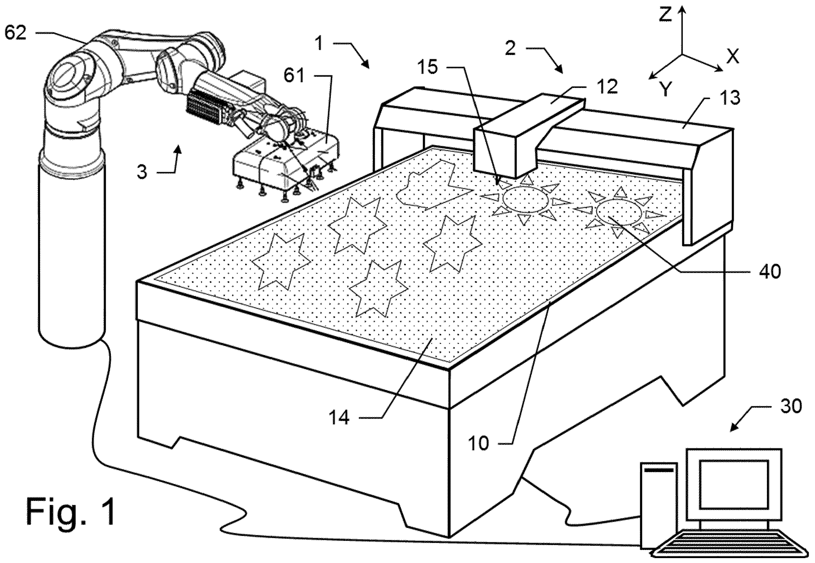

Figure 1 shows a generic cutting system 1 comprising a digital cutter 2 (i.e. a cutting machine) and a gripper 3 in a first embodiment. As a flat-bed cutting machine 2, it has a table with a flat working surface 10, on which there is placed, by way of example, a sheet of material 14 with several objects 40 to be cut out from the sheet.

Above the working surface 10 there is arranged a working group 12 with a cutting tool 15, in particular a blade or knife. The working group 12 is displaceable two-dimensionally relative to the working surface 10 in a motorized manner so as to be able to approach any point of the working surface 10. To this end, the working group 12 is mounted movably in the X direction on a bridge/beam 13, which is in turn mounted movably in the Y direction on the table.

A camera unit (not shown) may be arranged above the working surface 10 so that images of the entire working surface 10 can be recorded.

In particular, the cutting machine 1 may also have a cutting tool 15 driven in oscillation and/or may be designed for cutting multi-walled composite plates, as described for example in EP 2 894 014 B1.

The cutting machine 1 additionally has an automatic controller or controlling unit 30. As shown here, the computing unit may be embodied as an external computer, which has a data connection to the machine 1, and/or may be integrated in the form of an internal control unit into the machine 1 itself.

The automatic controller or controlling unit 30 additionally controls the gripper 3 configured to grip cut part(s) 40 cut out from the sheet. The gripper 3 comprises a movement apparatus 62 configured for moving a gripper head 61 in 3D, which gripper head 61 is configured for gripping the cut part(s) 40. The automatic controller or controlling unit 30 may use images of the working surface 10 acquired by the camera unit (not shown) based on which it may control the gripper 3.

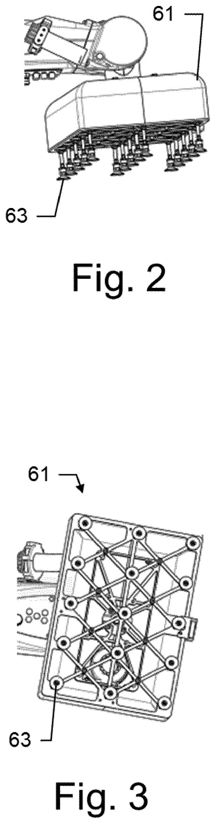

Figure 2 shows the gripper head 61 of Figure 1 more closely. The gripper head 61 is attached to the movement apparatus 62 shown in Figure 1. Suction spots 63 are attached to the gripper head 61, wherein the suction spots 63 are configured to grip cut part(s) 40. Different arrangements of suction spots 63 are feasible, i.e. the three times five suction spots arrangement of Figure 2 is purely exemplary.

Figure 3 shows the gripper head 61 of Figure 1 more closely from a further perspective. The geometric arrangement of suction spots 63 is clearly visible in Figure 3.

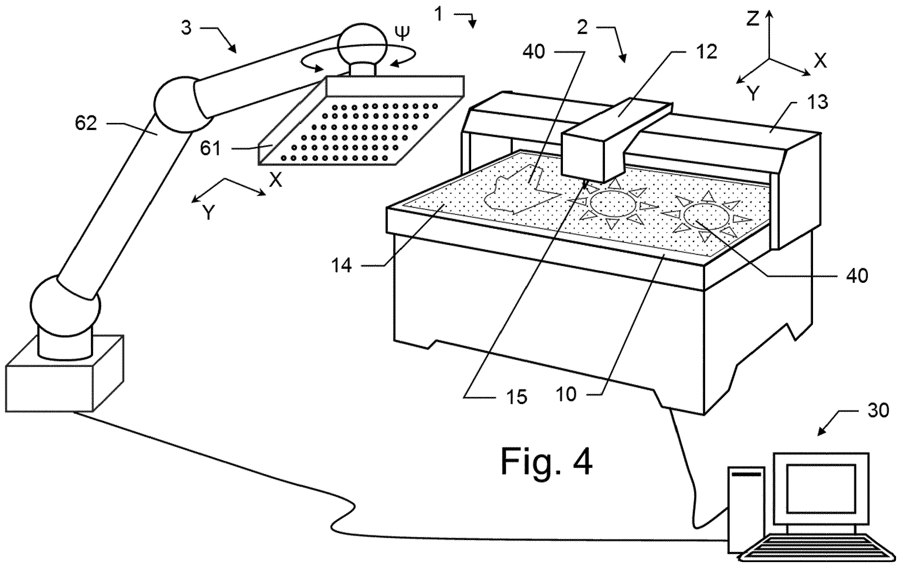

Figure 4 shows a generic cutting system 1 comprising a digital cutter 2 (i.e. a cutting machine) and a gripper 3 in a second embodiment. The embodiment shown in Figure 4 is similar to the embodiment shown in Figure 1 and differs from that embodiment in that the gripper 3 is changed. Specifically, both the movement apparatus 62 as well as the gripper head 61 are altered as compared to the embodiment of Figure 1. As indicated by the letter Ψ above the gripper head 61, the gripper head 61 can be rotated by the movement apparatus 62 around an axis, for example the axis defined along the last rigid segment (last rotary joint) of the articulated robot arm movement apparatus 62.

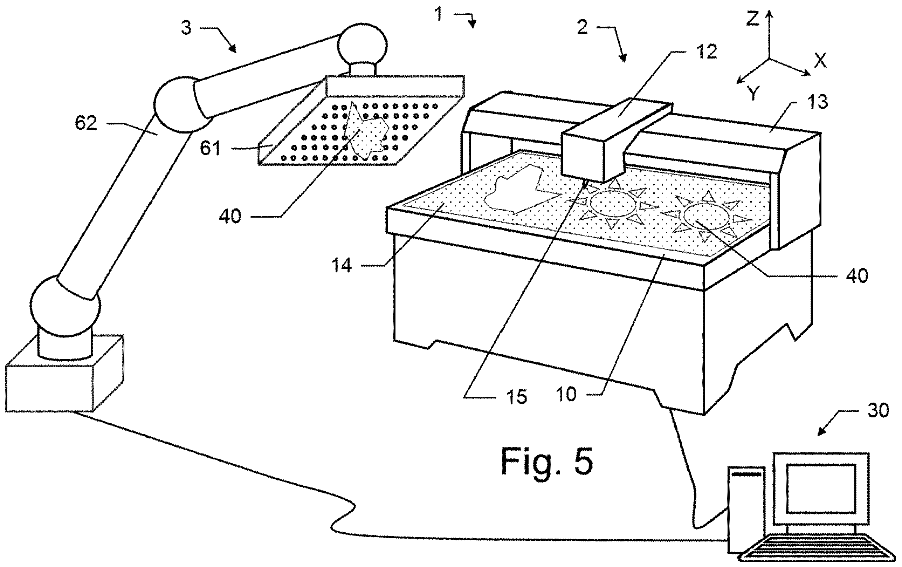

Figure 5 shows the embodiment of Figure 4, with the gripper 3 gripping a cut part 40 cut out from the sheet 14.

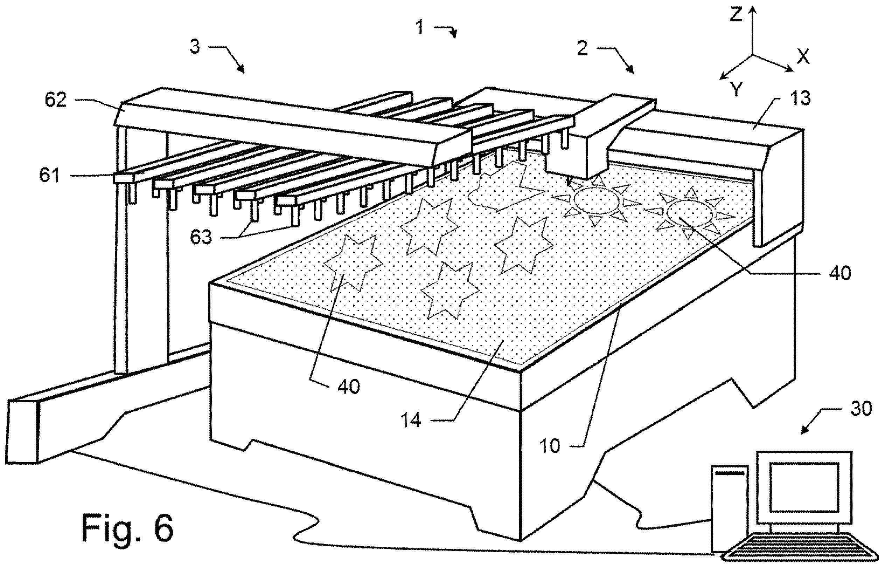

Figure 6 shows a generic cutting system 1 comprising a digital cutter 2 (i.e. a cutting machine) and a gripper 3 in a third embodiment. The embodiment shown in Figure 6 is similar to the embodiments shown in Figures 1 and 4 and differs from these embodiments in that the gripper 3 is changed. Specifically, both the movement apparatus 62 as well as the gripper head 61 are altered as compared to the embodiments of Figures 1 and 4.

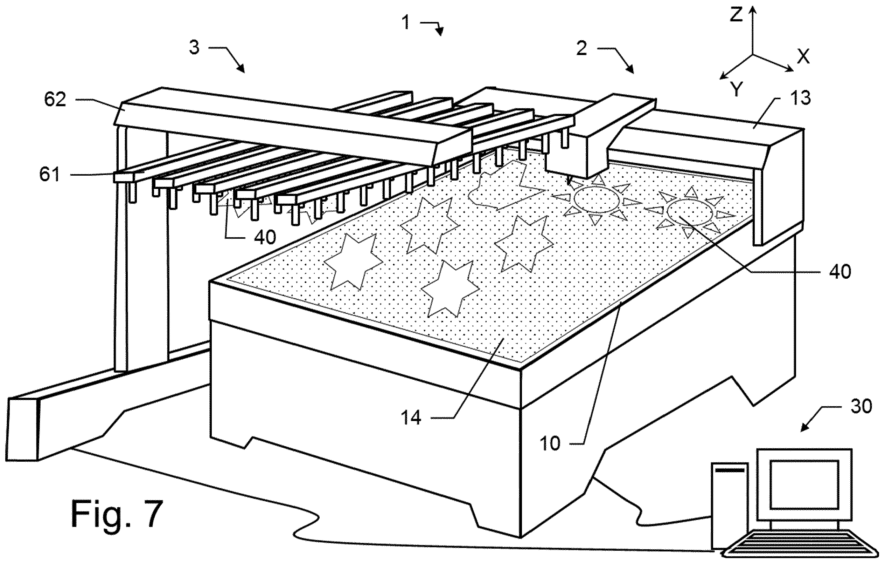

Figure 7 shows the embodiment of Figure 6, with the gripper 3 gripping cut parts 40 cut out from the sheet 14.

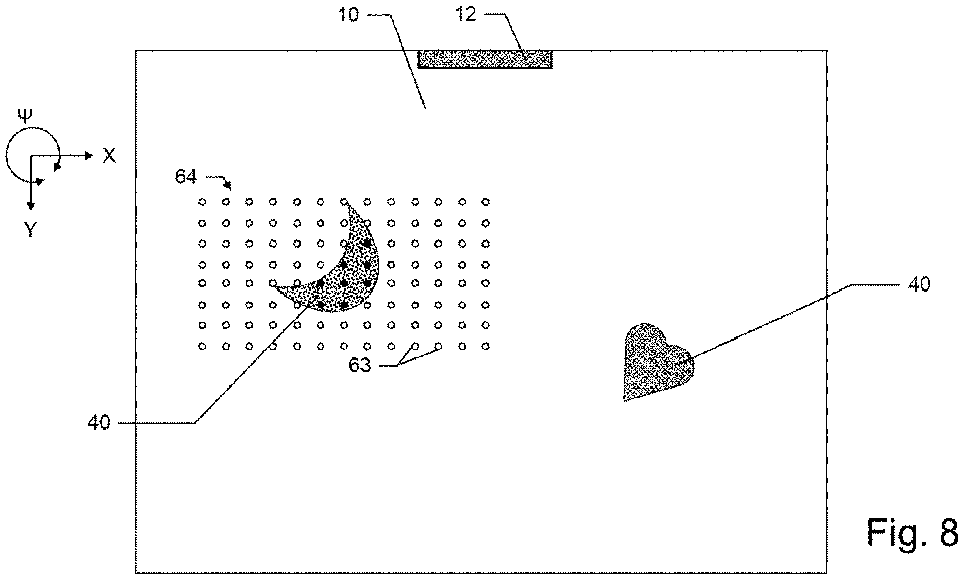

Figure 8 shows a flat working surface 10 from above and a not-optimized suction-spot-arrangement 64 with respect to a cut part 40 to be gripped. Before gripping the cut part 40, the cutter working group 12 is moved aside. The suction-spot-arrangement 64 on the flat working surface 10 is determined by the orientation and position of the gripper head 61 resp. the suction spots 61 - provided the gripper 3 comprises suction spots 63 - with respect to the flat working surface 10. In the case of suction spots 63 being present and in particular for a flat cut part 40 lying on the flat working surface 10, the suction-spot-arrangement 64 corresponds to those suction spots 63 which reach the flat working surface 10 first in case of a (virtual) orthogonal projection of the suction spots 63 onto the flat working surface 10. If all suction spots 63 have a same distance to the flat working surface 10, the suction-spot-arrangement 64 corresponds to the positioning of the suction spots 63 on a gripper head 61.

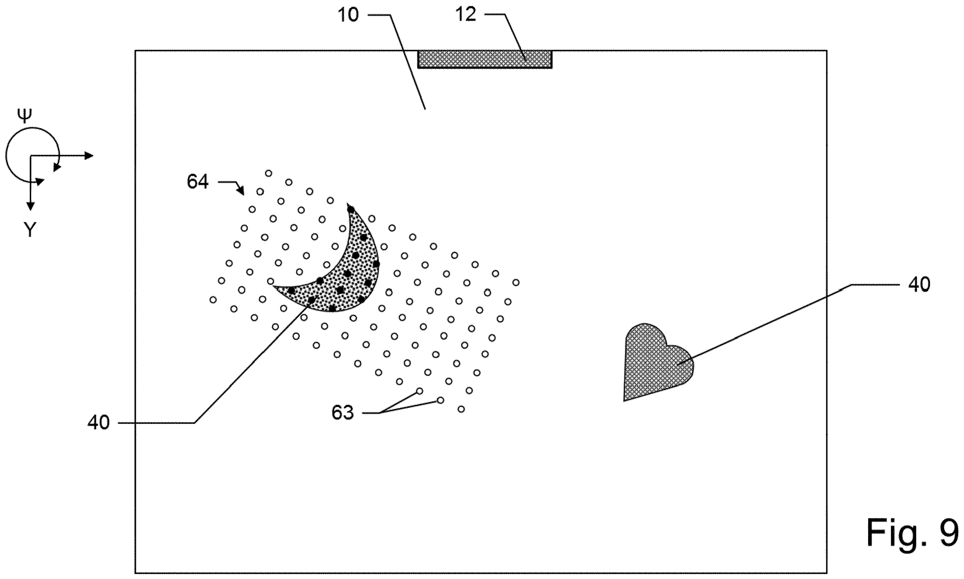

In Figure 8 as well as in Figures 9, 10 and 11 it is assumed that the gripper head 61 resp. the suction spots 63 are not inclined with respect to the flat working surface 10, i.e. e.g. all suction spots 63 have the same distance to the flat working surface 10. When gripping a cut part 40, the gripper head 61 resp. the suction spots 63 may in general, however, also be inclined with respect to the flat working surface 10.

The flat working surface 10 can be geometrically described using a coordinate system, e.g. a Cartesian coordinate system. An orientation and position of the suction-spot-arrangement 64 can be described in the coordinate system, wherein the position can e.g. be described using a center point of the suction-spot-arrangement 64, for example embodied as a symmetrical center point, and orientation can be described by a rotation angle in the coordinate system. When gripping the cut part 40, some of the suction spots 63 exert a suction force on the cut part 40 (shown in black in Figure 8), while other suction spots 63 do not exert a suction force on the cut part 40 (shown in white in Figure 8).

Figure 9 differs from Figure 8 in that the suction-spot-arrangement 64 is optimized according to the invention. The suction-spot-arrangement 64 is positioned and oriented in such a way that a maximum number of suction spots 63 exert a suction force on the cut part 40 which is assumed to lie flatly on the flat working surface 10. This way, the cut part 40 can be gripped in a more firm and stable way. In general, the gripper head may be positioned and oriented in such a way as to maximize the number of suction spots 63 or suction holes touching a cut part 40. Such a generalization may hold for cut parts to be gripped which potentially protrude from the flat working surface 10, i.e. for cut parts which are not flat.

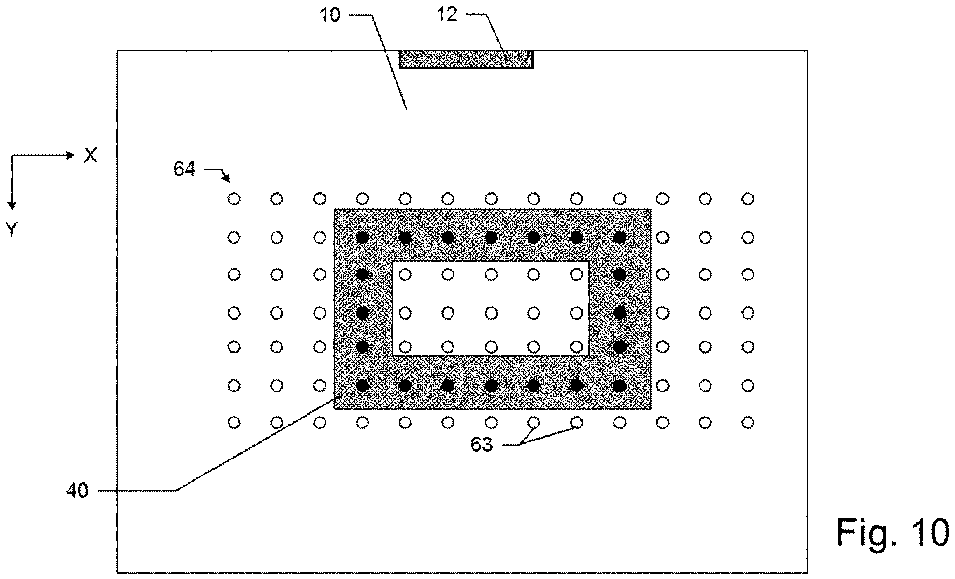

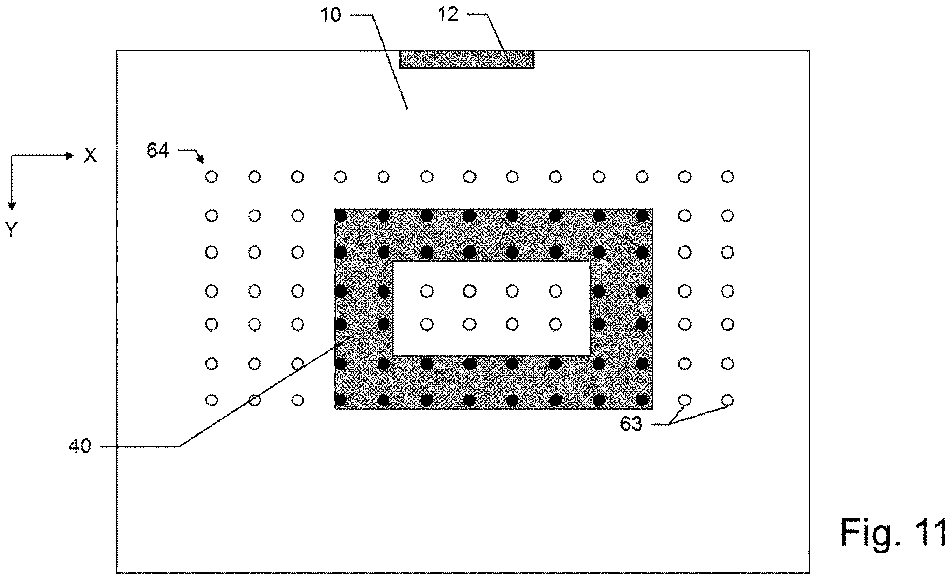

Figures 10 and 11 show a similar situation as shown in Figures 8 and 9, that is a not-optimized and an optimized suction-spot-arrangement 64 with respect to a cut part 40. The suction-spot-arrangement 64 of Figure 11 is optimized according to the invention as compared to Figure 10, i.e. the suction-spot-arrangement 64 of Figure 11 is positioned and oriented in such a way as to maximize the number of suction spots (or suction holes as shown in the gripper head of Figures 5 and 6, for example) which exert a suction force on the cut part 40 to be gripped.

Although the invention is illustrated above partly with reference to some preferred embodiments, it must be understood that numerous modifications and combinations of different features of the embodiments can be made. All of these modifications lie within the scope of the appended claims.

### List of reference numerals:

(1) cutting system
(2) digital cutter
(3) gripper
(10) working surface, defining x- and y-direction
(12) cutter head / cutter working group, moveable relative to bridge in x-direction
(13) bridge/x-beam of the digital cutter, moveable relative to table in y-direction
(14) sheet (sheet of material)
(15) cutting tool (e.g. knife)
(30) automatic controller (computer)
(40) cut parts(s)
(61) gripper head
(62) movement apparatus
(63) suction spots
(64) suction-spot-arrangement

## Claims

1. A computer-implemented method for a cutting system, the cutting system at least comprising
- a digital cutter for cutting a part of a sheet according to a cut design, the cut part having a specific pathway of its boundary line, and
- a gripper for picking up the cut part from the sheet, the gripper comprising a gripper head and a movement apparatus, in particular a gripper arm, such that the gripper head is provided with a plurality of degrees of freedom of motorized movement at least including a variable lateral position (x- and y-position) and/or a variable heading angle (Ψ) in a plane parallel to the sheet, the gripper head comprising a plurality of suction spots having known geometric arrangement, said arrangement of suction spots defining a mean grid spacing,
**characterised in that** the method comprising
- carrying out an optimization algorithm for determining a gripping pose in which the cut part is to be gripped by the gripper head, the optimization algorithm being programmed for maximizing a number of cut-part-facing suction spots coming to lie on the cut part in the gripping pose,
the optimization algorithm optimizing over at least one of
∘ heading angle candidates (Ψ) for the gripping pose within a range extending consistently over at least 90° and
∘ lateral position candidates for the gripping pose within sub-mean-grid-spacing range
under exploitation of
∘ first input data consistently representing the complete specific pathway of the boundary line of the cut part and
∘ second input data relating to the known geometric arrangement,
and
- providing the determined gripping pose as output data.

2. The method according to any one of the preceding claims, wherein the variable lateral position being a variable x- and a variable y-position of the gripper head in the plane parallel to the sheet, and the optimization algorithm
- optimizes over x-position candidates and y-position candidates for the gripping pose within sub-mean-grid-spacing range, in particular with at least millimeter resolution.

3. The method according to any one of the preceding claims, wherein the second input data relating to the known geometric arrangement includes knowledge about geometric positioning of each of the plurality of suction spots within the suction-spot-arrangement,
in particular wherein the suction-spot-arrangement has matrix form with fix positioning of the suction spots forming a regular rectangular grid, having constant grid spacing in the directions of extend of the rectangular grid, the constant grid spacing thus forming the mean grid spacing.

4. The method according to any one of the preceding claims, wherein the optimization algorithm
- optimizes over heading angle candidates for the gripping pose within the range extending consistently over at least 90° with at least five degree resolution or higher, the range in particular extending consistently over at least 180°, more particular over 360°.

5. The method according to any one of the preceding claims, wherein the optimization algorithm
- optimizes consistently over the complete available range of motorized movement for the gripper head including all available of the plurality of degrees of freedom of motorized movement, with sub-mean-grid-spacing resolution.

6. The method according to any one of the preceding claims, wherein the known geometric arrangement forms an irregular pattern, with fix positioning of the suction spots in an irregularly distributed form, wherein an average spacing in-between each pair of directly neighboring suction spots forming the mean grid spacing.

7. The method according to any one of the preceding claims, wherein
- the plurality of suction spots having known individual physical properties including at least one of a spot diameter and a suction strength, and
- the optimization algorithm is programmed for - as further optimization objective or objectives -
∘ maximizing an overall suction effect caused on the cut part by cut-part-facing suction spots overlaying the cut part in the gripping pose, and/or
∘ maximizing a total area as the sum of cut-part-facing suction spot areas overlaying the cut part in the gripping pose,
the optimization algorithm further
∘ exploiting third input data relating to the known individual physical properties of the suction spots.

8. The method according to any one of the preceding claims, wherein the optimization algorithm is programmed for - as further optimization objective -
- maximizing a number of cut-part-facing suction spots coming to lie on the cut part within a defined edge area close to the boundary line of the cut part in the gripping pose.

9. The method according to any one of the preceding claims, wherein two or more cut parts are to be cut by the digital cutter according to respective cut designs, each of the two or more cut parts having a specific pathway of its boundary line and a specific localization within the sheet,
wherein the optimization algorithm being programmed for - as further optimization objective - maximizing a number of cut-part-facing suction spots coming to lie in sum on the two or more cut parts in the gripping pose,
the optimization algorithm optimizing over heading angle candidates (Ψ) and/or lateral position candidates for the gripping pose further under exploitation of further input data consistently representing the complete specific pathway of the boundary line of each of the two or more cut parts and the specific localization within the sheet of each of the two or more cut parts.

10. The method according to any one of the preceding claims, wherein the gripper is built such that each of the plurality of suction spots is individually positionable to individual suction spot deflection-positions within the arrangement by an extend of maximal half of the mean grid spacing in at least one direction in a plane parallel to the sheet, such that the known geometric arrangement being variable,
wherein the optimization algorithm further optimizes over individual suction spot deflection-position candidates for each of the plurality of suction spots for the gripping pose,
further wherein, as the output data, the determined gripping pose including the optimized individual suction spot deflection-position for each of the plurality of suction spots being provided.

11. The method according to any one of the preceding claims, wherein the optimization algorithm is based on at least one of
- a graphical best fit approach,
- a linear programming approach, in particular the simplex algorithm,
- an iterative approach, in particular coordinate descent methods or the Newton's method, and
- a global convergence approach, and
- an heuristic approach, in particular a Hill climbing technique or the downhill simplex method.

12. The method according to any one of the preceding claims, wherein each suction spot of the plurality of suction spots is individually and selectively controllable and activatable, and wherein the automatic controller being further configured for providing indication about the cut-part-facing suction spots coming to lie on the cut part in the determined gripping pose as further output data.

13. An automatic controller for use as part of and within a cutting system, the cutting system at least comprising
- a digital cutter for cutting a part of a sheet according to a cut design and
- a gripper for picking up a cut part of the sheet, the gripper comprising a gripper head and a movement apparatus such that the gripper head is provided with a plurality of degrees of freedom of motorized movement including a variable heading angle and variable lateral position (as x- and y-position) in a plane parallel to the sheet, the gripper head comprising a plurality of suction spots having known geometric arrangement, said arrangement defining a mean grid spacing,
**characterised in that**
the automatic controller being configured to perform the method of any one of the preceding claims.

14. A computer program product comprising instructions which, when the program is executed by a computing unit, cause the computing unit to carry out the method of any one of claims 1 to 13.

15. A computer-readable data carrier having stored thereon the computer program product of claim 14, or a data carrier signal carrying the computer program product of claim 14.
